# EUROPEAN PATENT SPECIFICATION

(11) **EP 2 615 758 B1**
(45) Date of publication and mention of the grant of the patent: **09.08.2023**
(21) Application number: 11837593.0
(22) Date of filing: 04.11.2011
(51) Int. Cl.: A63F 13/30, A63F 13/60, H04L 1/24, A63F 13/35, H04L 1/00

(54) **FAULT-TOLERANT METHOD FOR ONLINE GAME INTERACTION LOGIC AND FAULT-TOLERANT SYSTEM AND CLIENT FOR ONLINE GAMES**
FEHLERTOLERANTES VERFAHREN FÜR EINE ONLINE-SPIEL-INTERAKTIONSLOGIK SOWIE FEHLERTOLERANTES SYSTEM UND CLIENT FÜR ONLINE-SPIELE
PROCÉDÉ À TOLÉRANCE DE PANNES POUR LOGIQUE D'INTERACTION DE JEUX EN LIGNE ET SYSTÈME À TOLÉRANCE DE PANNES ET CLIENT POUR JEUX EN LIGNE

(30) Priority: 04.11.2010 CN 201010536884
(43) Date of publication of application: 17.07.2013
(73) Proprietor: Tencent Technology (Shenzhen) Company Limited, Shenzhen, Guangdong, 518057 (CN)
(72) Inventor: LI, Wei, Shenzhen Guangdong 518057 (CN)
(74) Representative: RGTH
(86) International application number: PCT/CN2011/081787
(87) International publication number: WO 2012/059067

(56) References cited:
- CN-A- 101 334 291
- CN-A- 101 577 715
- US-A- 5 498 002
- US-A1- 2007 021 216
- US-A1- 2008 005 172
- US-A1- 2008 220 878
- ROCCETTI M ET AL: "The Brave New World of Multiplayer Online Games: Synchronization Issues with Smart Solutions", OBJECT ORIENTED REAL-TIME DISTRIBUTED COMPUTING (ISORC), 2008 11TH IEEE INTERNATIONAL SYMPOSIUM ON, IEEE, PISCATAWAY, NJ, USA, 5 May 2008 (2008-05-05), pages 587-592, XP031279215, ISBN: 978-0-7695-3132-8
- Unknown ET AL: "Bandwidth requirement and state consistency in three multiplayer game architectures", Proceedings of the 2nd workshop on Network and system support for games , NETGAMES '03, 1 January 2003 (2003-01-01), pages 52-59, XP055381780, New York, New York, USA DOI: 10.1145/963900.963905 ISBN: 978-1-58113-734-7

## Description

### TECHNICAL FIELD

The present disclosure relates to the field of computers, and in particular to a method for interactive logic fault tolerance in an online game, and a system and a client for fault tolerance in an online game.

### BACKGROUND

US 2007/021216 A1 discloses a method of playing an electronic game online, comprising: establishing the game using a game console; saving a current game state;
transferring the saved game state from the game console to a mobile device; and resuming the game online from the saved game state using the mobile device.

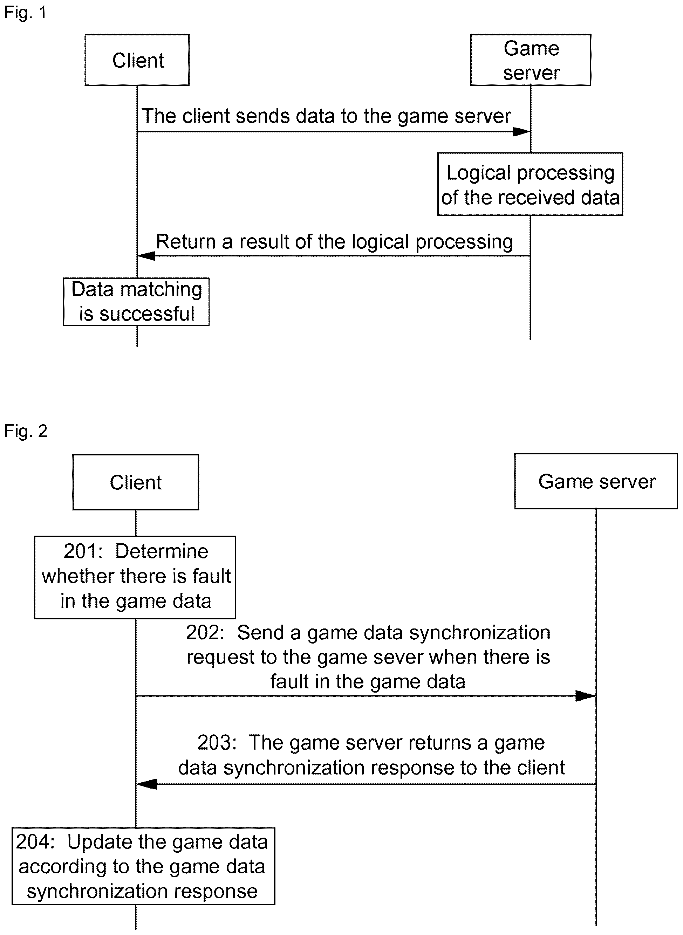

Fig. 1 illustrates a method for interactive logic fault tolerance in an online game according to the prior art; a client and a game server achieve a purpose of fault tolerance by data matching in an interaction process: each time a game player performs an operation, the client sends the operation data to the game server, the game server performs logical processing on the received data, and returns the data logically processed to the client, if data of the client and the game server are matched successfully, then it is indicated that game data of the client and game data of the game server are consistent.

If the client does not receive the data returned by the game server, then the client can not perform the operation of the game player, such that data of the client and data of the game server are inconsistent, a logic status error is caused and a game can not continue.

### SUMMARY

In view of the above, the main purpose of the disclosure is to provide a method for interactive logic fault tolerance in an online game, a system for fault tolerance in an online game and a client for fault tolerance in an online game, so as to solve the problem that game data of a client is inconsistent with game data of a game server. The invention is defined by the attached claims.

### BRIEF DESCRIPTION OF THE DRAWINGS

Fig. 1 shows a flowchart illustrating a method for interactive logic fault tolerance in an online game according the prior art;
Fig. 2 shows a flowchart illustrating a method for interactive logic fault tolerance in a universal online game according to one embodiment of the present disclosure;
Fig. 3 shows a structure diagram illustrating a client in a system for fault tolerance in an online game according to one embodiment of the present disclosure;
Fig. 4 shows a structure diagram illustrating a game server in a system for fault tolerance in an online game according to one embodiment of the present disclosure; and
Fig. 5 shows a structure diagram illustrating a system for fault tolerance in an online game according to one embodiment of the present disclosure.

### DETAILED DESCRIPTION

To make the purpose, technical solution and advantages of the disclosure more clear and better understood, the disclosure will be further described in detail in combination with the drawings and examples hereafter. It should be appreciated that the specific examples described here are merely used to explain the disclosure rather than define the disclosure.

In embodiments of the disclosure, a client sends a game data synchronization request to a game server when there is fault in the game data, and adjusts game data of the client by comparing the game data of the client with game data of the game server, so that an online game may continue.

A method for interactive logic fault tolerance in an online game includes the following steps:
a client determines whether there is fault in game data of the client; the client sends a game data synchronization request to a game server when it is determined that there is fault in the game data of the client;
the game server returns a game data synchronization response to the client, and the game data synchronization response comprises correct game data corresponding to
the false game data; and the client updates the game data of the client according to the game data synchronization response.

A system for fault tolerance in an online game includes: at least one client configured to determine whether there is fault in game data, send a game data
synchronization request to a game server when it is determined that there is fault in the
game data, receive a game data synchronization response returned by the game server, and update the game data of the client according to the game data synchronization response; and
   the game server configured to receive the game data synchronization request sent
by the client and return the game data synchronization response to the client;
   wherein the game data synchronization response comprises correct game data corresponding to the false game data.

Fig. 2 shows a flowchart illustrating a method for interactive logic fault tolerance in a universal online game according to one embodiment of the disclosure, and the method specifically includes the following steps:
Step 201: a client determines whether there is fault in the game data.

As one example of the disclosure, each time a game player performs an operation, a client sends an operation instruction to a game server, and the game server sends feedback information for the game operation instruction from the game server to client; if the client does not receive the feedback information for the game operation instruction from the game server, then the client determines that there is fault in the game data.

According to the embodiment being claimed, the client sends a user data acquisition request to the game server when the client can not determine whether the game data of the client is consistent with game data of the game server; after receiving the game data acquisition request, the game server returns a game data response to the client, and the game data response comprises game data requested by the user data acquisition request; the client compares the game data returned by the game server with the game data stored locally; and when the game data returned by the game server is inconsistent with the game data stored locally, the client determines game data corresponding to the operation instruction is false.

Step 202: the client sends a game data synchronization request to a game server when it is determined that there is fault in the game data.

Step 203: the game server returns a game data synchronization response to the client, and the game data synchronization response comprises correct game data corresponding to the false game data.

Step 204: the client updates game data of the client according to the game data synchronization response.

In embodiments of the disclosure, the client sends the game data synchronization request to the game server when it is determined that there is fault in the game data, the game server returns the game data synchronization response to the client, and the game data synchronization response comprises correct game data corresponding to the false game data, and the client updates the game data of the game player according to the game data synchronization response returned by the game server, which solves the problem that game data of the client is inconsistent with game data of the game server, so that the client can also play a game by synchronizing the game data with the game server when there is fault in the game data.

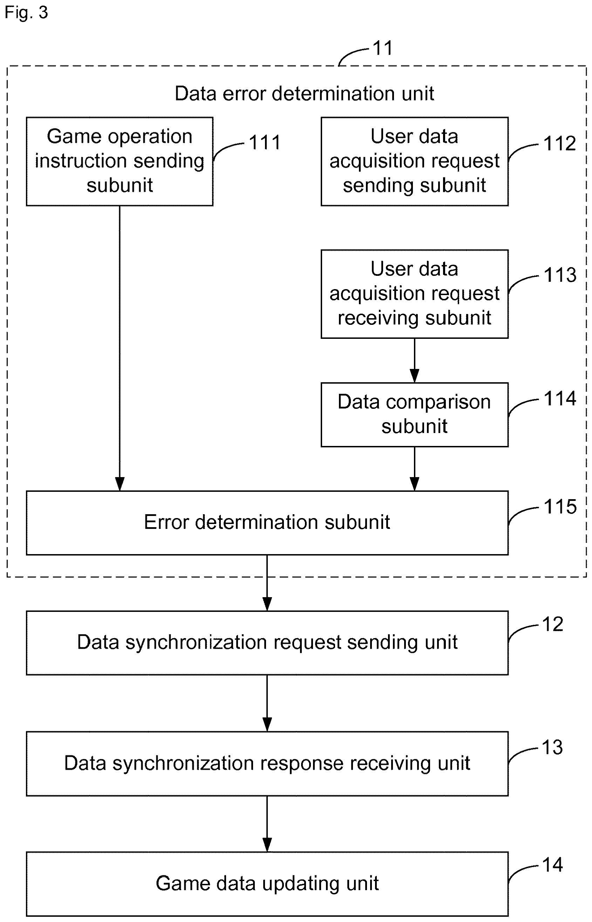

Fig. 3 shows a structure diagram illustrating a client in a system for fault tolerance in an online game according to one embodiment of the disclosure; to facilitate explanation, only portions related to implementation of the disclosure are shown. The client includes: a data error determination unit 11, a data synchronization request sending unit 12, a data synchronization response receiving unit 13 and a game data updating unit 14.

The data error determination unit 11 is configured to determine whether there is fault in the current game data of the client; and the data error determination unit 11 can further include: a game operation instruction sending subunit 111 configured to send a game operation instruction to the game server; a user data acquisition request sending subunit 112 configured to send a game data acquisition request to the game server when the client does not determine whether game data of the client is consistent with game data of the game server; a user data acquisition request receiving subunit 113 configured to receive the game data sent by the game server; a data comparison subunit 114 configured to compare the game data returned by the game server with the game data stored locally; and an error determination subunit 115 configured to determine that game data corresponding to the game operation instruction is false when the client does not receive feedback information for the game operation instruction from the game server or the game data returned by the game server is inconsistent with the game data stored locally.

As one example of the disclosure, each time a game player performs an operation, the game operation instruction sending subunit 111 of the client sends an operation instruction to the game server, and the game server sends feedback information for the game operation instruction to client; if the client does not receive the feedback information for the game operation instruction from the game server, then the error determination subunit 115 determines that there is fault in the game data.

According to the claimed embodiment, the user data acquisition request sending subunit 112 sends the user data acquisition request to the game server when the client can not determine whether game data of the client is consistent with game data of the game server; after receiving the game data acquisition request, the game server returns a game data response to the client, and the game data response comprises game data requested by the user data acquisition request; the user data acquisition request receiving subunit 113 receives the game data sent by the game server; the data comparison subunit 114 compares the game data returned by the game server with the game data stored locally; and when the game data returned by the game server is inconsistent with the game data locally stored, the error determination subunit 115 determines game data corresponding to the operation instruction is false.

The data synchronization request sending unit 12 is configured to send a game data synchronization request to a game server when the data error determination unit 11 determines that there is fault in the game data;
the data synchronization response receiving unit 13 is configured to receive a game data synchronization response returned by the game server; and the game data updating unit 14 is configured to update game data of a game player according to the game data synchronization response received by the data synchronization response receiving unit 13, wherein the game data synchronization response includes correct game data corresponding to the false game data.

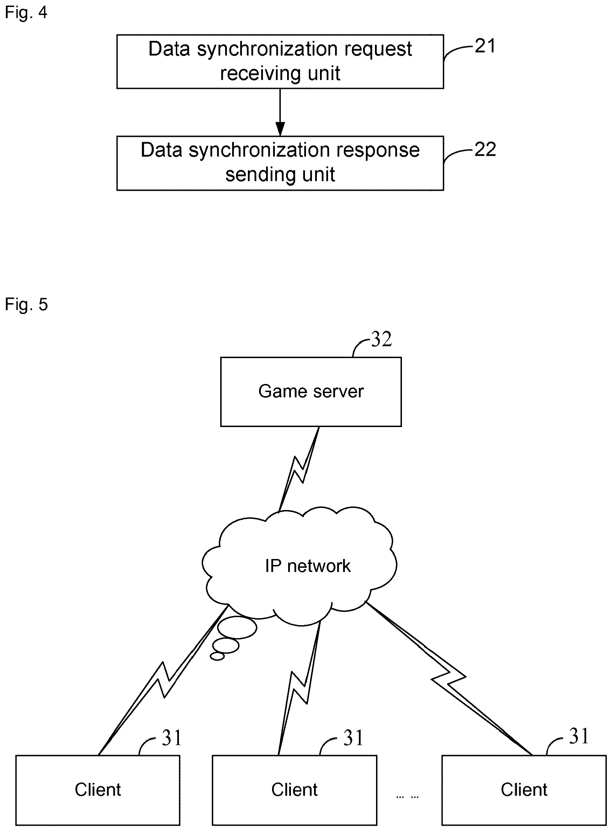

Fig. 4 shows a structure diagram illustrating a game server in a system for fault tolerance in an online game according to one embodiment of the disclosure; for illustrative purposes, only portions related to implementation of the disclosure are shown.

A data synchronization request receiving unit 21 is configured to receive a game data synchronization request sent by a client; and
a data synchronization response sending unit 22 is configured to return a game data synchronization response to the client.

Wherein the game data synchronization request is sent to the game server when the client determines that there is fault in the game data, and the game data synchronization response includes correct game data corresponding to the false game data.

In embodiments of the disclosure, the client sends the game data synchronization request to the game server when it is determined that there is fault in the game data, the game server returns the game data synchronization response to the client, and the game data synchronization response comprises correct game data corresponding to the false game data, and the client updates the game data of the game player according to the game data synchronization response returned by the game server, which solves the problem that game data of the client is inconsistent with game data of the game server, so that the client can also play a game by synchronizing the game data with the game server when there is fault in the game data.

Fig. 5 shows a structure diagram illustrating a system for fault tolerance in an online
game according to one embodiment of the disclosure, and the system specifically includes:
at least one client 31 is configured to determine whether there is fault in the game data, send a game data synchronization request to a game server when it is determined that there is fault in the game data, receive a game data synchronization response returned by a game server 32, and update game data of a game player according to the game data synchronization response, wherein the game data synchronization response comprises correct game data corresponding to the false game data; and the game server 32 is configured to receive the game data synchronization request sent by the client 31 and return the game data synchronization response to the client 31.

The scope of the present invention is defined by the attached claims.

## Claims

1. A method for interactive logic fault tolerance in an online game, comprising:
sending, by a client, a user data acquisition request to a game server when the client cannot determine whether game data of the client is consistent with game data of the game server;
returning, by the game server, a game data response to the client, and the game data response comprises game data requested by the user data acquisition request; **characterised by**:
comparing, by the client, the game data returned by the game server with the game data stored locally;
determining (201), by the client, that there is a fault in game data of the client when the game data returned by the game server is inconsistent with the game data stored locally;
sending (202), by the client, a game data synchronization request to the game server; returning (203), by the game server, a game data synchronization response to the client, the game data synchronization response comprising correct game data corresponding to the false game data; and updating (204), by the client, the game data of the dient according to the game data synchronization response.

2. A system for fault tolerance in an online game, comprising at least one client (31) and a game server (32), wherein
the at least one client (31) is configured to send a user data acquisition request for the game operation to the game server when the c lie n t cannot determine whether the 25 game data of the client is consistent with game data of the game server, receive a game data response returned by the game server (32), the game data response comprising game data requested by the user data acquisition request, **characterised in that** the client is further configured to compare the game data returned by the game server (32) with the game data stored locally, determine that there is a fault in game data of the client (31) when the game data returned by the game server (32) is inconsistent with the game data stored locally, send a game data synchronization request to the game server, receive a game data synchronization response returned by the game server (32), and update the game data of the client (31) according to the game data synchronization response, wherein the game data synchronization response comprises correct game data corresponding to the false game data; and the game server (32) is configured to return the game data response for the user data acquisition request, receive the game data synchronization request sent by the client (31) and return the game data synchronization response to the client (31).

3. A client for fault tolerance in an online game, comprising:
a data error determination unit (11) configured to determine whether there is a fault in the current game data of the client;
a data synchronization request sending unit (12) configured to send a game data synchronization request to a game server when the data error determination unit (11) determines that there is a fault in the game data;
a data synchronization response receiving unit (13) configured to receive a game data synchronization response returned by the game server; and
a game data updating unit (14) configured to update the game data of the client according to the game data synchronization response received by the data synchronization response receiving unit (13), wherein the game data synchronization response comprises correct game data corresponding to the false game data;
wherein the data error determination unit (11) comprises:
a user data acquisition request sending subunit (112) configured to send a game data acquisition request to the game server when the client cannot determine whether the game data of the client is consistent with game data of the game server;
a user data acquisition request receiving subunit (113) configured to receive the game data sent by the game server;
a data comparison subunit (114) configured to compare the game data returned by the game server with the game data stored locally; and
an error determination subunit (115) configured to
determine that game data corresponding to the game operation instruction is false when the game data returned by the game server is inconsistent with the game data stored locally.

## Patentansprüche

1. Verfahren zur interaktiven Logikfehlertoleranz in einem Online-Spiel, umfassend:
Senden einer Benutzerdatenerfassungsanforderung durch einen Client an einen Spielserver, wenn der Client nicht feststellen kann, ob die Spieldaten des Clients mit den Spieldaten des Spielservers konsistent sind;
Zurücksenden einer Spieldatenantwort an den Client durch den Spielserver, und die Spieldatenantwort umfasst Spieldaten, die durch die Benutzerdatenerfassungsanforderung angefordert wurden;
**gekennzeichnet durch**:
Vergleichen, durch den Client, der vom Spielserver zurückgegebenen Spieldaten mit den lokal gespeicherten Spieldaten;
Bestimmen (201), durch den Client, dass ein Fehler in den Spieldaten des Clients vorliegt, wenn die vom Spielserver zurückgegebenen Spieldaten inkonsistent mit den lokal gespeicherten Spieldaten sind;
Senden (202), durch den Client, einer Spieldaten-Synchronisationsanforderung an den Spielserver;
Zurücksenden (203), durch den Spielserver, einer Spieldaten-Synchronisationsantwort an den Client, wobei die Spieldaten-Synchronisationsantwort korrekte Spieldaten umfasst, die den falschen Spieldaten entsprechen; und
Aktualisieren (204), durch den Client, der Spieldaten des Clients gemäß der Spieldaten-Synchronisationsantwort.

2. System zur Fehlertoleranz in einem Online-Spiel, umfassend mindestens einen Client (31) und einen Spielserver (32), wobei
der mindestens eine Client (31) so konfiguriert ist, dass er eine Benutzerdatenerfassungsanforderung für den Spielbetrieb an den Spielserver sendet, wenn der Client nicht feststellen kann, ob die Spieldaten des Clients mit den Spieldaten des Spielservers konsistent sind, eine vom Spielserver (32) zurückgegebene Spieldatenantwort empfängt, wobei die Spieldatenantwort von der Benutzerdatenerfassungsanforderung angeforderte Spieldaten umfasst, **dadurch gekennzeichnet, dass** der Client ferner so konfiguriert ist, dass er die vom Spielserver (32) zurückgegebenen Spieldaten mit den lokal gespeicherten Spieldaten vergleicht, feststellt, dass ein Fehler in den Spieldaten des Clients (31) vorliegt, wenn die vom Spielserver (32) zurückgegebenen Spieldaten inkonsistent mit den lokal gespeicherten Spieldaten sind, eine Spieldaten-Synchronisationsanforderung an den Spielserver sendet, eine vom Spielserver (32) zurückgegebene Spieldaten-Synchronisationsantwort empfängt und die Spieldaten des Clients (31) gemäß der Spieldaten-Synchronisationsantwort aktualisiert, wobei die Spieldaten-Synchronisationsantwort korrekte Spieldaten umfasst, die den falschen Spieldaten entsprechen; und
der Spielserver (32) so konfiguriert ist, dass er die Spieldatenantwort für die Benutzerdatenerfassungsanforderung zurückgibt, die vom Client (31) gesendete Spieldaten-Synchronisationsanforderung empfängt und die Spieldaten-Synchronisationsantwort an den Client (31) zurückgibt.

3. Ein Client für Fehlertoleranz in einem Online-Spiel, umfassend:
eine Datenfehler-Bestimmungseinheit (11), die so konfiguriert ist, dass sie bestimmt, ob ein Fehler in den aktuellen Spieldaten des Clients vorliegt;
eine Datensynchronisationsanforderungs-Sendeeinheit (12), die so konfiguriert ist, dass sie eine Spieldaten-Synchronisationsanforderung an einen Spielserver sendet, wenn die Datenfehler-Bestimmungseinheit (11) feststellt, dass ein Fehler in den Spieldaten vorhanden ist;
eine Datensynchronisationsantwort-Empfangseinheit (13), die so konfiguriert ist, dass sie eine vom Spielserver zurückgegebene Spieldaten-Synchronisationsantwort empfängt; und
eine Spieldaten-Aktualisierungseinheit (14), die so konfiguriert ist, dass sie die Spieldaten des Clients gemäß der von der Datensynchronisationsantwort-Empfangseinheit (13) empfangenen Spieldaten-Synchronisationsantwort aktualisiert, wobei die Spieldaten-Synchronisationsantwort korrekte Spieldaten umfasst, die den falschen Spieldaten entsprechen;
wobei die Datenfehler-Bestimmungseinheit (11) Folgendes umfasst
eine Benutzerdatenerfassungsanforderungs-Sendeuntereinheit (112), die so konfiguriert ist, dass sie eine Spieldatenerfassungsanforderung an den Spielserver sendet, wenn der Client nicht feststellen kann, ob die Spieldaten des Clients konsistent mit den Spieldaten des Spielservers sind;
eine Benutzerdatenerfassungsanforderungs-Empfangsuntereinheit (113), die so konfiguriert ist, dass sie die von dem Spielserver gesendeten Spieldaten empfängt;
eine Datenvergleichsuntereinheit (114), die so konfiguriert ist, dass sie die vom Spielserver zurückgegebenen Spieldaten mit den lokal gespeicherten Spieldaten vergleicht; und
eine Fehlerbestimmungsuntereinheit (115), die so konfiguriert ist, dass sie bestimmt, dass die Spieldaten, die der Spielbetriebsanweisung entsprechen, falsch sind, wenn die vom Spielserver zurückgegebenen Spieldaten inkonsistent mit den lokal gespeicherten Spieldaten sind.

## Revendications

1. Procédé à tolérance de pannes pour logique d'interaction dans un jeu en ligne, comprenant :
l'envoi, par un client, d'une demande d'acquisition de données d'utilisateur à un serveur de jeu lorsque le client ne peut pas déterminer si les données de jeu du client sont conformes aux données de jeu du serveur de jeu ;
le renvoi, par le serveur de jeu, d'une réponse de données de jeu au client, et la réponse de données de jeu comprend des données de jeu demandées par la demande d'acquisition de données d'utilisateur ;
**caractérisé par** :
la comparaison, par le client, des données de jeu renvoyées par le serveur de jeu avec les données de jeu stockées localement ;
la détermination (201), par le client, qu'il y a une erreur dans des données de jeu du client lorsque les données de jeu renvoyées par le serveur de jeu ne sont pas conformes aux données de jeu stockées localement ;
l'envoi (202), par le client, d'une demande de synchronisation de données de jeu au serveur de jeu ;
le renvoi (203), par le serveur de jeu, d'une réponse de synchronisation de données de jeu au client, la réponse de synchronisation de données de jeu comprenant des données de jeu correctes correspondant aux données de jeu erronées ; et
la mise à jour (204), par le client, des données de jeu du client en fonction de la réponse de synchronisation de données de jeu.

2. Système à tolérance de pannes dans un jeu en ligne, comprenant au moins un client (31) et un serveur de jeu (32), dans lequel
l'au moins un client (31) est configuré pour envoyer une demande d'acquisition de données d'utilisateur pour l'opération de jeu au serveur de jeu lorsque le client ne peut pas déterminer si les données de jeu du client sont conformes aux données de jeu du serveur de jeu, recevoir une réponse de données de jeu renvoyée par le serveur de jeu (32), la réponse de données de jeu comprenant des données de jeu demandées par la demande d'acquisition de données d'utilisateur,
**caractérisé en ce que** le client est en outre configuré pour comparer les données de jeu renvoyées par le serveur de jeu (32) avec les données de jeu stockées localement, déterminer qu'il y a une erreur dans les données de jeu du client (31) lorsque les données de jeu renvoyées par le serveur de jeu (32) ne sont pas conformes aux données de jeu stockées localement, envoyer une demande de synchronisation de données de jeu au serveur de jeu, recevoir une réponse de synchronisation de données de jeu renvoyée par le serveur de jeu (32), et mettre à jour les données de jeu du client (31) en fonction de la réponse de synchronisation de données de jeu, dans lequel la réponse de synchronisation de données de jeu comprend des données de jeu correctes correspondant aux données de jeu erronées ; et
le serveur de jeu (32) est configuré pour renvoyer la réponse de données de jeu pour la demande d'acquisition de données d'utilisateur, recevoir la demande de synchronisation de données de jeu envoyée par le client (31), et renvoyer la réponse de synchronisation de données de jeu au client (31).

3. Client à tolérance de pannes dans un jeu en ligne, comprenant :
une unité de détermination d'erreur de données (11) configurée pour déterminer s'il y a une erreur dans les données de jeu actuelles du client ;
une unité d'envoi de demande de synchronisation de données (12) configurée pour envoyer une demande de synchronisation de données de jeu à un serveur de jeu lorsque l'unité de détermination d'erreur de données (11) détermine qu'il y a une erreur dans les données de jeu ;
une unité de réception de réponse de synchronisation de données (13) configurée pour recevoir une réponse de synchronisation de données de jeu renvoyée par le serveur de jeu ; et
une unité de mise à jour de données de jeu (14) configurée pour mettre à jour les données de jeu du client en fonction de la réponse de synchronisation de données de jeu reçue par l'unité de réception de réponse de synchronisation de données (13), dans lequel la réponse de synchronisation de données de jeu comprend des données de jeu correctes correspondant aux données de jeu erronées ;
dans lequel l'unité de détermination d'erreur de données (11) comprend :
une sous-unité d'envoi de demande d'acquisition de données d'utilisateur (112) configurée pour envoyer une demande d'acquisition de données de jeu au serveur de jeu lorsque le client ne peut pas déterminer si les données de jeu du client sont conformes aux données de jeu du serveur de jeu ;
une sous-unité de réception de demande d'acquisition de données d'utilisateur (113) configurée pour recevoir les données de jeu envoyées par le serveur de jeu ;
une sous-unité de comparaison de données (114) configurée pour comparer les données de jeu renvoyées par le serveur de jeu avec les données de jeu stockées localement ; et
une sous-unité de détermination d'erreur (115) configurée pour déterminer que des données de jeu correspondant à l'instruction d'opération de jeu sont fausses lorsque les données de jeu renvoyées par le serveur de jeu ne sont pas conformes aux données de jeu stockées localement.
